# EUROPEAN PATENT APPLICATION

(11) **EP 0 579 051 A2**
(43) Date of publication of application: **19.01.1994**
(21) Application number: 93110526.6
(22) Date of filing: 01.07.1993
(51) Int. Cl.: B67D 5/02

(54) **System for aseptically emptying flexible foodstuff containers**

(30) Priority: 15.07.1992 IT MI921717
(71) Applicant: CIRIO, BERTOLLI, DE RICA SOCIETA GENERALE DELLE CONSERVE ALIMENTARI SpA, I-80100 Napoli (IT)
(72) Inventor: Giagnetich, Euro, I-55100 Lucca (IT); Luongo, Mario, I-80026 Casoria (Napoli) (IT); Sassi, Carlo, I-43100 Parma (IT); D'uva, Antonio, I-80078 Pozzuoli (Napoli) (IT)
(74) Representative: Coloberti, Luigi

(57) **Abstract**

A system for aseptically emptying flexible containers for sterile foodstuffs. The flexible container is in the form of a bag (10) arranged inside a rigid container (14) closable by a cover (23) provided with pressing means (24) for compressing the bag (10) in order to expel the foodstuff product without causing the breakage of the same bag (10). The bag (10) is provided with a pierceable emptying mouthpiece (11) that is held in a retaining opening in the cover (23) or in the bottom of the rigid container (14) providing piercing means (30) and an aseptic connection (27) to a discharge duct (25); once the aseptic connection (27) has been established and the mouthpiece (11) has been perforated, aseptic emptying of the bag (10) is effected by compressing it inside the rigid container (14).

## Description

The invention relates to a system for aseptically emptying flexible containers for sterile foodstuff products, in which a flexible container is in the form of a bag formed by laminated plastic sheet material is provided with a suitable emptying mouthpiece that can prevent any contact with the air and with the external surroundings during emptying of the bag.

To ensure the conservation of foodstuff products, for example those based on tomato, fruit, milk and, in general, liquid and pasty foodstuffs as well as those in chopped form, appropriate sterilisation treatments are carried out to render to microbial charge inactive, which would otherwise alter the packaged product, thereby making it less palatable or making it toxic for consumption.

The problem of qualitative deterioration following sterilisation treatment of the product has been solved in recent decades by means of suitable methods for aseptically filling the containers to conserve the product either in the form of semi-finished product or as a finished product.

A number of the products currently treated with aseptic methods are semi-finished, such as ingredients that are subsequently used to obtain various finished products, or are stored at the time the raw materials are processed in order to be then packaged in containers which will be used over a period of a year.

The containers used for the semi-finished products are generally large. In the case, for example, of stainless steel tanks, the dimensions are in multiples of ten cubic metres, or in hundreds of litres for dense or non-homogeneous products for which smaller-sized, containers are preferred in order to avoid the risk of excessive waste during emptying or the stratification of the product during the storage period.

The possibility of storing semi-finished products in large containers with high-productivity plants during gathering operations of the product offers significant economic advantages due to the reduced use of labour in said operations as compared with the case where the finished product is packaged directly in small-sized containers suitable for use, by employing smaller-sized plant for final packaging of the product. The reason is that a far longer period may be allowed for re-processing and packaging the product. In this way peak labour demand is reduced during the gathering in season; furthermore, production of the finished product can be co-ordinated with market demand throughout the entire year, yielding additional savings in raw material, containers, and warehousing space.

Notwithstanding, the advantages secured by aseptic packaging when producing semi-finished products in large storage containers during gathering in operations are, to a large extent, nullified by the loss of product quality that can occur during re-processing. Indeed, at present when semi-finished products are to be re-used, to be added to a mixture or introduced into a final packaging plant, the containers are simply opened and emptied into a hopper or into a storage tank in the plant, thereby bringing the product once again into contact with the atmosphere. The resulting re-contamination makes it necessary to apply a further pasteurising or sterilising treatment to the finished product. The effect of this is to further impair the organoleptic characteristics of the products and, as things currently stand, this cannot be avoided.

Accordingly, the main object of this invention is to provide a system for emptying flexible, disposable containers that enables the retrieval from them of sterile products, at ambient temperature, to be fed to a processing plant, without the product coming into contact with the environment or with non-sterile parts that could re-contaminate.

Within the above-stated object, a further object of this invention is to provide a system for aseptically emptying flexible containers for foodstuff products such as to avoid damage to the product, in particular to products that are non-homogeneous or with solid parts immersed in a conserving liquid.

Another object of this invention is to provide an emptying system that can guarantee the integrity of the container during emptying, so as to avoid the high risk of re-contamination of the product and of the packaging plant located downstream of the emptying section.

An additional object of this invention is to provide a method for aseptically emptying flexible containers, as described above, which has high efficiency, such as to enable maximum retrieval of the product up to a high percentage value of, or close to, 98%.

The above-stated objects are attainable through a system for aseptically emptying flexible containers according to the main claim. Further objects and advantages can be attained through the system and plant according to the dependent claims.

The general features of the system for emptying flexible containers according to the invention and a number preferential embodiments, as also a preferred embodiment of a plant for implementing said method, shall be described and illustrated below with reference to the appended drawings, in which:
- Figures 1 to 6: are diagrams illustrating a preferred embodiment of the aseptic emptying system according to the invention;
- Fig. 7: is a side view of an embodiment of a plant operating in accordance with the system of the preceding figures;
- Fig. 8: is an end view of the plant in Fig. 7;
- Fig. 9: is an enlarged detail of Fig. 8 showing the device for aseptic connection to a container to be emptied;
- Fig. 10: is an enlarged view of the base of an auxiliary drum used with the plant in Fig. 7;
- Fig. 11: is an enlarged detail of an embodiment of a cover equipped with a device for compressing the bag container;
- Fig. 12: is a detail similar to that in Fig. 11 for a second embodiment;
- Fig. 13: is a diagram of a further embodiment of the emptying system according to the invention, viewed in longitudinal section;
- Fig. 14: is a diagram of a third variant of the emptying system according to the invention, viewed in cross-section.

Most containers for semi-finished products on the market are in the form of flexible plastic bags with aluminium protection to heighten the barrier effect against oxygen in the air. Normally, the bags are placed in a further, rigid supporting container which allows them to be stacked and which, according to its shape, may be made up of a cylindrical or conic metal drum or by a wooden crate of parallelepiped shape with capacity varying between 200 and 1,000 litres. The bags are normally provided with a filling mouthpiece sealed with a snap-on cap and are emptied simply by breaking the bag. According to this invention said filling mouthpiece may be also used for aseptic emptying the bag or, where necessary, the bag may be provided with an additional, emptying mouthpiece.

A first system according to the invention will now be described that provides for the use of an auxiliary drum equipped for the emptying of a flexible container after the usual supporting rigid container has been removed.

As shown in the figures, reference number 10 indicates a flexible plastic container, hereinafter designated more simply as "bag", for containing a food substance previously aseptically packaged in said bag. The bag 10 is provided with an emptying mouthpiece 11 and is housed in a rigid supporting container 12 in the shape of a truncated cone, normally closed with its own cover, which must be removed beforehand.

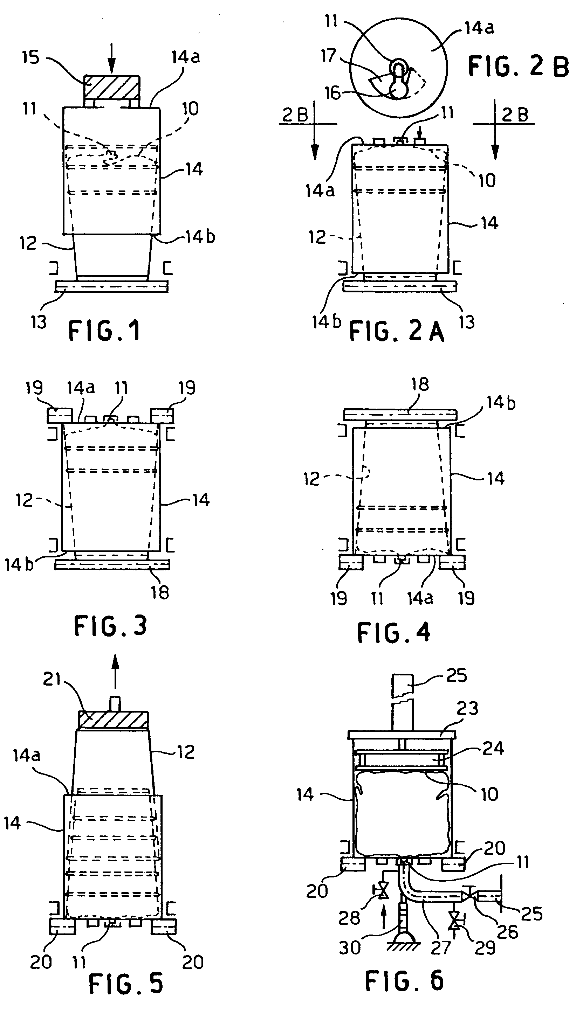

Again in Fig. 1, reference number 14 indicates an auxiliary container or "auxiliary drum" which must be let down over the rigid container 12 until it totally envelopes it in order to subsequently enable emptying of the bag through the emptying mouthpiece 11; without need of cutting the bag and therefore in conditions that are entirely sterile, as explained below.

The auxiliary drum 14 is initially fully raised there being a space from the roller set 13 in order the rigid container 12 holding the bag 10 may be positioned on said roller set. Furthermore, reference number 15 in figure 1 indicates a gripping means for holding up the auxiliary drum 14, for example by the bottom 14A which is suitably arranged to allow the mouthpiece 11 to emerge from an opening 16 provided with means 17 for clamping the mouthpiece protruding from the bottom 14A of the auxiliary drum, as diagrammatically shown in figures 2A and 2B of the drawings.

The auxiliary drum 14 of the example in Figures 1 to 6 is a container of a suitable shape and size for enclosing a normal rigid supporting container 12 for the bag 10. For this reason the auxiliary drum 14 is open on the side opposed to its bottom 14A. Since the auxiliary drum 14 is to be completely superimposed on the rigid container 12 so as to house it internally, the internal diameter or dimensions of the auxiliary drum 14 shall be slightly greater than the maximum diameter or maximum external dimensions of the container 12.

Initially the auxiliary drum 14 is totally raised with its open side facing downwards, while the rigid container 12 is positioned on the roller set 13 with its open side, facing upwards to access the bag 10. The auxiliary drum 14, held by its bottom 14A by the gripping device 15, is lowered and made to completely slip over the rigid container 12 as shown in Figure 2A.

At this point the mouthpiece 11 is withdrawn from the opening 16 in the bottom 14A of the auxiliary drum, and is clamped in its withdrawed condition, by the clamping device 17. The following stage comprises an upsetting that is a rotation through 180 degrees, of the auxiliary drum 14 with the rigid container 12 and the flexible bag 10 inside it, in such a way that the emptying mouthpiece 11 faces now downwards. From the area where the auxiliary drum is fitted in place, shown in Figures 1 and 2A, the assembly consisting of the auxiliary drum 14, the container 12, and the flexible bag 10 is transferred by a roller set 18, to an upsetting area shown in Figures 3 and 4 in the appended drawings. This area is provided with a revolving device having roller sets 18 and 19, able to upset the entire assembly by turning it upside down through 180 degrees, as is shown by a comparison between Figures 3 and 4 of the appended drawings. From Fig, 4 it will in fact be seen that the position of the roller sets 18 and 19 is reversed, that the auxiliary drum 14 now has its mouthpiece engaged in the downward facing bottom of the auxiliary drum, while the open side 14B of the auxiliary drum is now facing upwards. After the reversion shown in Fig. 4, the entire auxiliary drum 14 is transferred to a position, shown in Fig. 5, for removing the rigid container 12. In this position, the auxiliary drum 14 rests on another roller set 20 while a suitable gripping device 21 is lowered to grip the rigid container 12 by its bottom, to raise and withdraw it from the auxiliary drum 14, so that the bag 10 gently slips out of the container 12 and, in this way, remains entirely inside the auxiliary drum 14. The device for removing the container 12 may be of any shape or type: for example, it may consist in a grasping device that take hold at the bottom the container 12 in a suitable position, or any other mechanical and/or magnetic device that firmly attaches to the bottom or to the sides of the rigid container and which grips it with sufficient force to make its withdrawal feasible.

The flexible bag 10 in the auxiliary drum 14 is now ready for aseptic emptying as shown in Fig. 6.

The open side of the auxiliary drum 14, in this example, is so designed to be gripped by a cover 23 provided with a pressure device for thrusting or compressing the flexible bag 10, as explained below, and which in the example in Fig. 6 is represented in the form of a piston member 24 slidably supported by the cover 23 and operated by a hydraulic or pneumatic cylinder 25, or by any other linear actuator, to be moved within the auxiliary drum 14 to and from the bottom 14A. The pressure device for emptying the bag 10, here represented in the form of a piston member 24, can in fact be implemented in any appropriate way and, as an alternative to what is shown, according to the nature of the product to be discharged, and the operating conditions, the mechanical thrusting piston may be replaced by any other thrusting device, including pneumatic, as illustrated below.

To aseptically empty the bag 10 in the position in Fig. 6 a suitable device must be provided that enables aseptic connection of the bag mouthpiece 11 to a discharge duct 25. For this purpose the duct 25 is connected by a valve 26 to a movable or flexible duct 27 provided with suitable sealing means to enable a sealed connection with the mouthpiece 11. The duct 27, through valves 28 and 29, is connected to a feed circuit for disinfecting fluid to clean those parts of the mouthpiece 11 and of the tube 27 which come into contact with the atmosphere or which may contain product residue that has come into contact with the air between emptying one bag and emptying the next one and, therefore, has lost its aseptic characteristics.

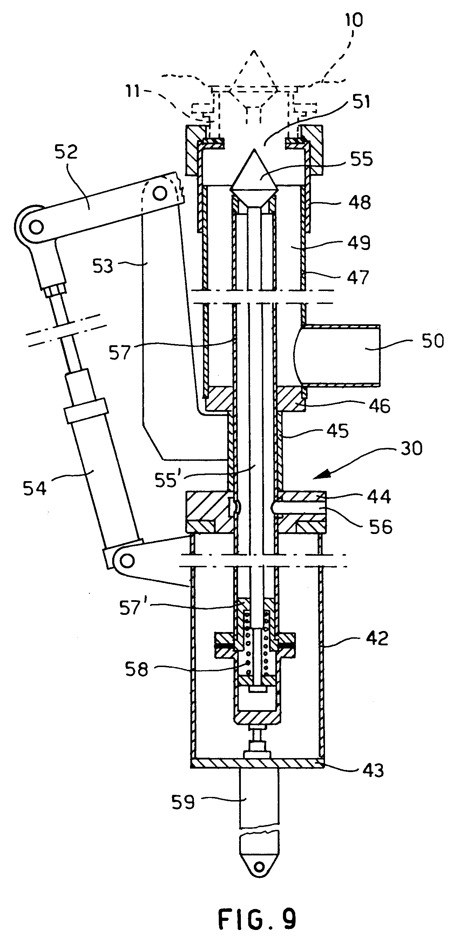

Finally, reference number 30 in Fig. 6 indicates a piercing device for perforating the mouthpiece 11 by penetrating into the mouthpiece under aseptic conditions through the mobile tube 27 as described below with reference to an embodiment shown in Fig. 9.

Accordingly, valves 26, 28 and 29 are initially shut out. Only after tube 27 has been coupled to the mouthpiece 11, so as to form a sealed connection, valves 28 and 29 are opened to allow circulation of a cleaning fluid, for example steam and/or sterilising chemical agents such as iodophors, oxygenated water, chlorine and others. Following this, valves 28 and 29 are again shut out and device 30 is operated to perforate the mouthpiece 11. The discharge valve 26 is opened and, simultaneously, the pressure device 24 is operated to press against the bag 10 without breaking it, the latter remaining supported by the counter-thrust provided by the sides of the auxiliary drum 14, to expel the foodstuff product in the direction of the mouthpiece 11 and into the discharge duct 25.

When emptying of the bag 10 has been completed the valve 26 is shut out, the pressure device 24 is moved backwards, the cover 23 is released from the auxiliary drum, and the latter is returned to the position in Fig. 1 to the cycle with a new container 12 which, in the meantime, has been positioned and prepared on the roller set 13.

As an alternative to the above, in substitution of the pierceable special emptying mouthpiece 11, the bag may be emptied from the normal filling mouthpiece which can be made perforable at the moment the connection is made with the discharging duct 25, after removed of the closing plug.

The mouthpiece may be perforated with any mechanical system, or with pressurised gas or any other device that can guarantee aseptic conditions for the entire process to keep the food product sterile inside the bag to be emptied and in the direction of the discharge pipe connected to a processing plant.

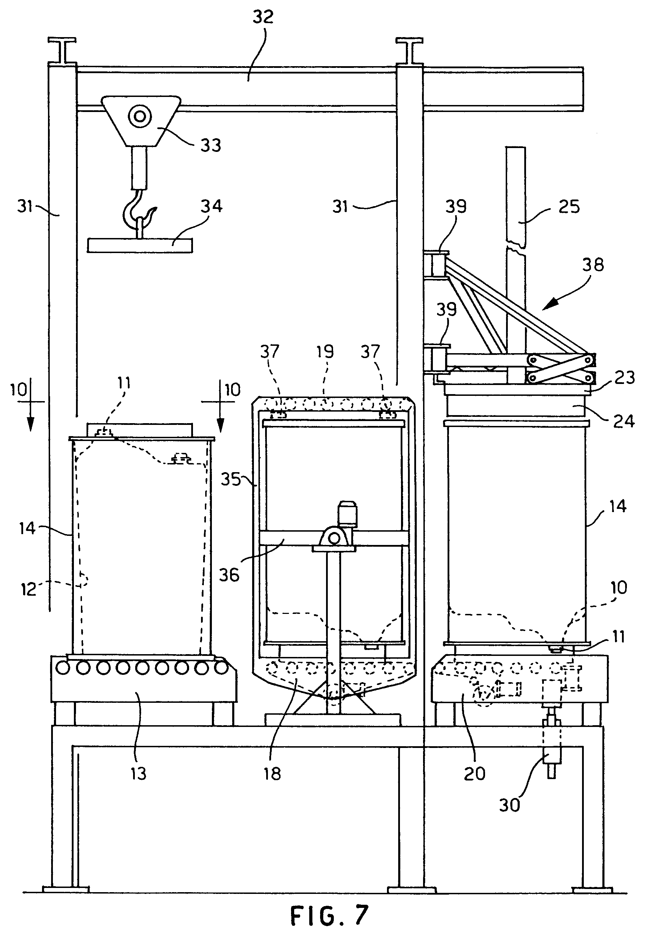

With reference now to Figures 7 to 10, we shall describe a preferred embodiment of a plant for aseptically emptying flexible containers using the system set out above. Accordingly, in Figures 7 to 10 the same reference numbers shall be used as in Figures 1 to 6 to indicate parts that are similar or equivalent.

As shown in Fig. 7, the apparatus mainly comprises a frame 31 provided with four roller sets 13, 18, 19, and 20 which, together, define a rolling surface for the rigid container 12 and the auxiliary drum 14.

The frame 31 has at its top a rail 32 along which slides a hoisting device 33 provided with a magnetic or mechanical gripping member 34 which, before the reversing operation, takes hold of an auxiliary drum 14 that has to be raised and slipped over a rigid container 12 underneath and, after the reversing, takes hold of the rigid container 12 to draw it off the auxiliary drum as previously described in Figures 1 to 5 of the appended drawings.

The first roller set 13 is provided with idling rollers on which the container 12, with the bag 10 containing the food product in perfectly aseptic conditions, is placed.

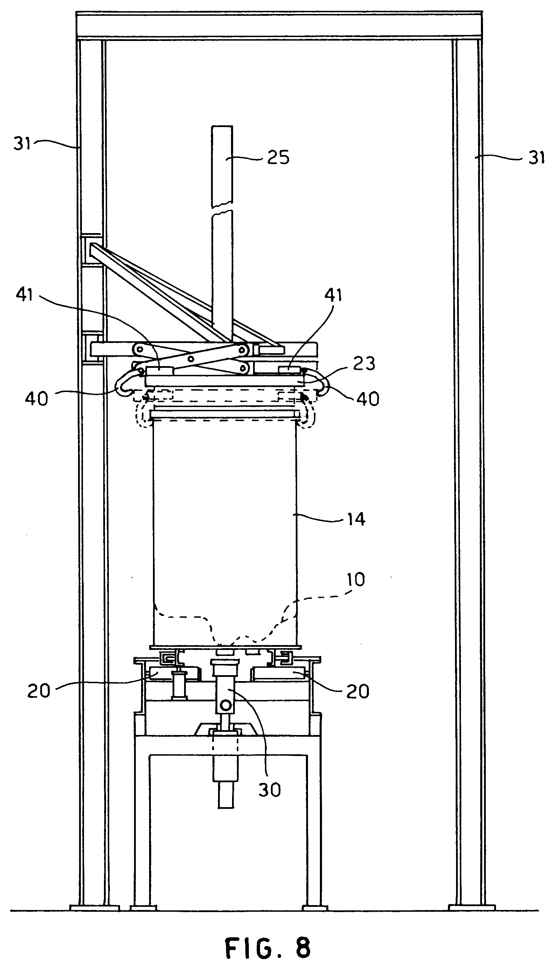

The second roller set 18 is provided with motor-driven rollers to enable the containers to be displaced and the third roller set 19 is again with idling rollers. Roller sets 18 and 19 form part of a device for reversing the drums and are positioned at the opposite ends of a revolving open-side cage 35. The cage 35, with the containers inside it, can be driven to rotate through 180 degrees about a central motor-driven shaft 36, suitable clamping devices 37 being provided to prevent the containers from moving and from falling down during the reversing movement. The fourth roller set 20, shown both in Fig. 7 and in Fig. 8, is in its turn has motor-driven rollers for transferring the containers from the central position to a final position where the bag 10 is aseptically connected to the perforation device 30 for emptying the bag.

The apparatus in Figures 7 and 8 also comprises a cover moving device 38 for putting on and taking off the cover 23 with the pressure device 24 for emptying the flexible bag. The device 38, in the example shown, is laterally connected by a hinge at 39 to an upright 31 and is driven by a hydraulic or other type of actuator, not shown, to rotate between a position in alignment with the auxiliary drum 14 below and a lateral position to allow the rigid container to be drawn off as described with reference to Fig. 5. The specially equipped cover 23 is supported by the device 38, for example by crossed rods, so as to be moved between a raised position in Fig. 7, with the pressure member 24 completely withdrawn from the auxiliary drum 14, and a lowered position as shown by the broken lines in Fig. 8, in which the pressure device 24 is inside the auxiliary drum 14 and in which the cover 23 firmly grips the open edge of the auxiliary drum by means of gripping devices 40 operated by respective drive cylinders 41.

Referring now to Fig. 9 we shall describe a preferred embodiment of the device 30 for piercing and aseptically emptying a bag or flexible container 10. As shown, the device 30 comprises a supporting structure made up of a hollow cylindrical body 42 that can be connected by a hinge to the structure 31 of the apparatus. The cylindrical body 42 is closed at its ends by a lower head piece 43 and by an upper head piece 44. A first tubular element 45 is fixed to and extends upwards from the upper head piece 44 to connect with the lower head piece 46 of a second hollow cylindrical body 47 provided with a sliding sleeve 48 defining a chamber 49 for the sterile connection to the discharge duct through a lateral pipe fitting 50. At its upper end the sleeve 48 has an internal flange defining a seal about a central hole 51 for the connection with the emptying mouthpiece 11 of the flexible container 10 and for passing through of a piercing member for perforating the bag as described below. The movable sleeve 48 is made to slide between a backward position in which it is disengaged from the mouthpiece 11, and a forward position in which it forms a seal against the mouthpiece 11. This movement is controlled by a fork member 52 which has its pivotal axis on an arm 53 protruding from the tubular element 45, said fork member 52 being driven by a hydraulic or pneumatic cylinder 54. It is clear that the sliding movement of the sleeve for aseptic connection 48 can be obtained in any other suitable form.

The piercing device can be of any type: mechanical, of pressure type and/or gas jet actuated. In the case shown, the device for perforating the bag or a closing membrane with which the mouthpiece 11 may be fitted, comprises a lance 55 mounted on the upper end of a rod 55' slidingly positioned in an internal tubular element 57 extending from the cylindrical body 42 along the tubular element 45, inside the chamber 49 and towards the sliding sleeve 48. The internal tubular element 57 is closed at its lower end by a plug 57' defining the seat for a biasing spring 58 for the perforating lance 55; the lance in the lowered position shown in Fig. 9 sealingly closes the upper extremity of the tubular element 57. The tubular element 57, through a conduit 56 in the flange 44, can also be connected to a duct for the circulation of a cleaning fluid for cleaning and disinfecting the chamber 49 and the mouthpiece 11, as previously described in relation to Fig. 6. The pressure of the cleaning fluid fed through the tubular element 57 slightly raises the lance 55 to allow the cleaning fluid to circulate. Subsequently, the lance 55 can be raised to the position for perforating the bag, shown by the broken line in Fig. 9, by causing the internal tube 57 to slide upwards, guided by the external tubular element 45, by means of the hydraulic or pneumatic cylinder 59.

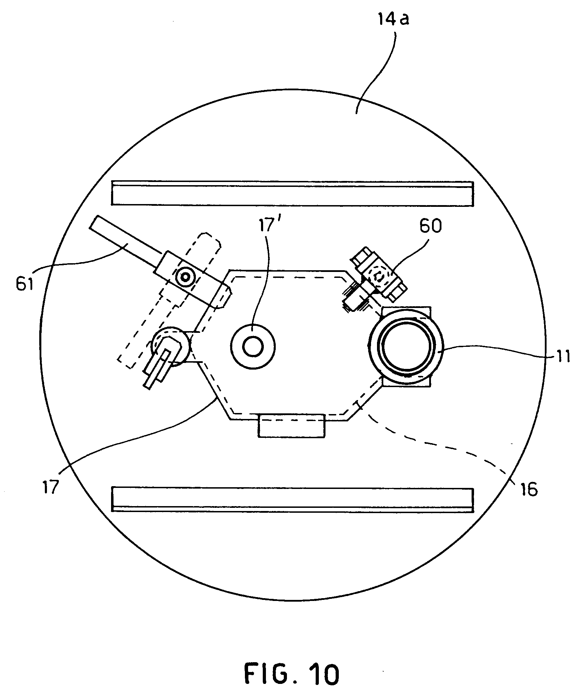

Fig. 10 in the appended drawings is an enlarged view of Fig. 28 and shows a specific solution for the bottom wall 14A of the auxiliary drum and for the means for clamping the emptying mouthpiece 11.

Reference number 16 in fig. 10 indicates the opening in the bottom 14A through which the mouthpiece 11 is withdrawn and which is normally closed by lid 17 hingedly connected at 60 by a double hinge having orthogonal axes. The lid 17, at its lateral edge, is shaped to clamp the mouthpiece 11 in the narrow part of the opening 16 and is, in its turn, clamped in the closing position by a rotating lever 61 mounted on the bottom 14A of the auxiliary drum. A knob 17' facilitates taking hold of the lid in order to raise it. It is obvious, however, that solutions other than that described are possible.

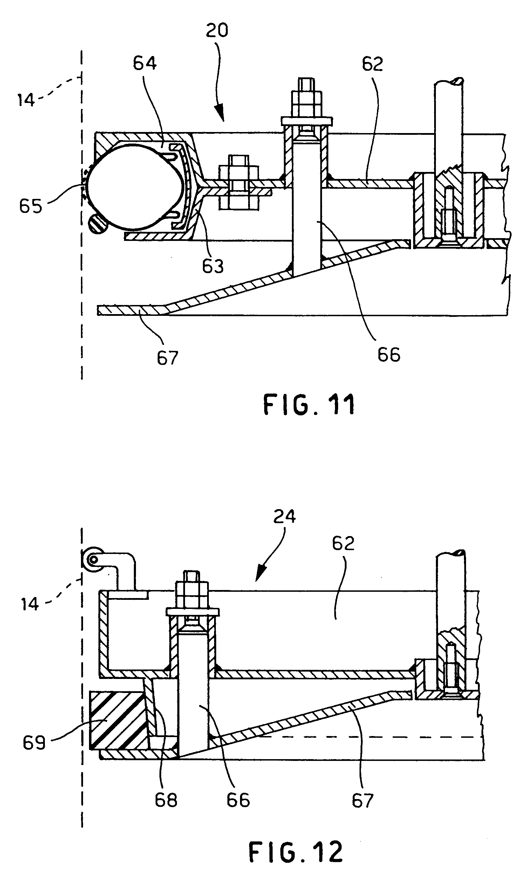

The following figures 11 and 12, show two variants relating to different configurations of the pressure member 24 for compressing the bag inside the auxiliary drum 14 or the container 12, one lateral side of which is diagrammatically shown in Figures 11 and 12 by a broken line. The pressure member 24 partially shown in the first solution in Fig. 11 comprises a shaped plate 62 connected to the piston rod of a drive cylinder indicated by reference number 25 in the preceding figures. The plate 62 together with a circular-shaped counter plate 63 defines an annular seat 64 which holds an inflatable tubular member 65 forming a pneumatic seal that, during the compression of the flexible bag, prevents the latter from creeping up and being squeezed between the outside edge of the pressure member 24 and the inner face of the wall of the auxiliary drum 14. The plate 62, through rods 66 supports a small thrust plate 67 that comes into contact with the bag to be emptied. The thrust plate 67 can be rigidly or movably connected to the plate 62 such as to allow a slight backward displacement with respect to plate 62. This slight displacement of the thrust plate 67 can serve to radially thrust a possible further seal (not shown) that can be elastically deformed, provided for example between the pneumatic seal 65 and the outside edge of the thrust plate 67. A similar solution is shown for example in the following Fig. 12, from which it can be seen that close to its outer edge the shaped plate 62 has a circular fin 68 facing downwards and slanted inwards so as to define a truncated-cone thrust surface able to make an elastic seal 69 expand radially outwards until it is brought into contact with the internal wall of the auxiliary drum 14 by means of a slight backwards movement of the thrust plate 67 with respect to the shaped plated 62 as a result of the reaction that the thrust plate undergoes at the moment of the initial thrusting on the bag.

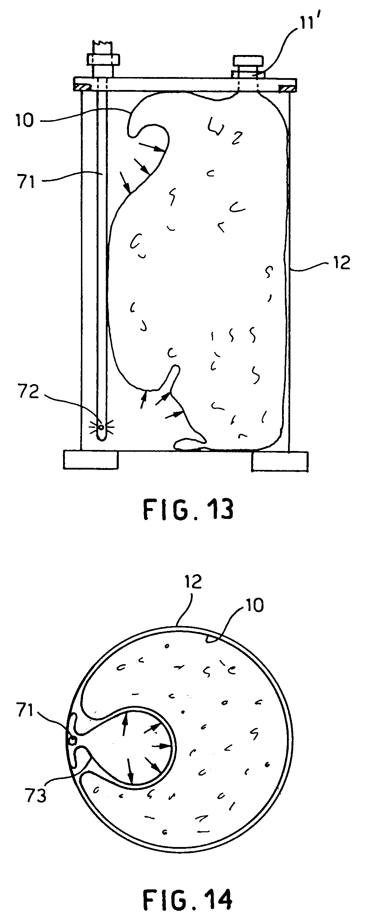

As initially stated it is possible apply other systems for compressing the bag 10, both inside the auxiliary drum 14 and directly inside the rigid container 12 normally provided for transporting and stacking the flexible containers. Two possible solutions are shown in Figures 13 and 14 which will now be briefly described. In both cases the bag or flexible container 10 is kept inside its rigid container 12 onto which, once the latter has been opened, is lowered and fastened a suitable cover 70 (Figure 13) fitted with the necessary means for compressing the bag 10.

In the case of Fig. 13 these means comprise a long nozzle 71, that connects with a compressed air or gas source and extends through the cover 70 inside the container 12 and, effectively, down the latter's entire length. The nozzle 71 is provided at one or more points with openings 72 for the escape of the compressed air which, in this way, tends to compress the flexible bag 10 against an opposing wall of the container 12 and therefore to squeeze the product out for example, through the filling mouthpiece 11' after the latter has been suitably connected to a discharge duct in an aseptic manner, for example by means of a valve device of the kind previously described.

The variant in Fig. 14 differs from that in Fig. 13 solely in the fact that here use is made of an inflatable thrust element 73 again mounted on the cover 70, which gradually expands inside the container 12 and increasingly presses against the flexible bag 10 until it completely empties the latter. This solution has the advantage of introducing a safety element that prevents a direct contact between gas or air released by the nozzle 71 and the flexible bag 10 to be emptied.

It is evident, however, that the shape and the position of the nozzles 71 and of one or more inflatable elements for compressing the bag can vary with respect to what has been shown, without thereby departing from the innovative principle of this invention which, on the basis of the aseptic emptying methods explained, consists essentially in providing the flexible bag with a discharge mouthpiece which may be the bag filling mouthpiece or an additional mouthpiece; in providing said mouthpiece with pierceable part that can be perforated; by placing over the open side of a rigid supporting container which may be equally the rigid container normally used for storage or a separate auxiliary container, a closing cover provided with pressure means for thrusting and compressing the bag; the emptying mouthpiece of the flexible container is therefore made to protrude out from one side of the rigid supporting container, which may be the side of the specially equipped cover or the bottom of the container or auxiliary container. Subsequently, through a special aseptic-perforation valve device, the mouthpiece or the area of the bag at the mouthpiece is perforated in such a way as to aseptically connect the mouthpiece to a discharge duct, and the aseptic emptying of the flexible bag is effected by compressing it from inside the rigid supporting container in the direction of the emptying mouthpiece, while the flexible bag is supported by the rigid container that totally surrounds it and which prevents its rupture.

It is therefore intended that what has been described and explained with reference to the appended drawings has been given purely by way of example of a number of possible embodiments of the method for aseptically emptying flexible containers for food products according to the invention.

## Claims

1. A system for aseptically emptying a flexible bag container (10) in plastic material, according to which the bag (10) is provided with a hermetically closed emptying mouthpiece (11), characterised by the fact of:
- providing said emptying mouthpiece (11) with a pierceable area that can be perforated and arranging the flexible bag (10) in a rigid supporting container (14) having one open side;
- placing over the open side of the rigid container (14) a closing cover (23) provided with suitable pressure means (24) for compressing the flexible gag (10), after said emptying mouthpiece (11) has been made to protrude and changed through an opening in the bottom or in the closing cover of the rigid container (14); and
- sealingly connecting said mouthpiece (11) to a discharge duct (25), provision being made for aseptically cleaning the mouthpiece (11) and the duct (25) before the bag (10) is emptied;
- perforating said discharge mouthpiece (11) after the cleaning operation and causing the aseptic emptying of the flexible bag (10) by compressing it from inside the rigid supporting container (14).

2. A system according to claim 1, characterised by the fact that the compression of the flexible bag (10) is carried out mechanically by a thrust member (24).

3. A system according to claim 1, characterised by the fact that compressions of the flexible bag (10) is pneumatically performed by an expandable thrust member (73) arranged inside the rigid supporting container (14), between an inner surface of the latter and the flexible bag (10).

4. A system according to claim 1, characterised by the fact that compression of the bag (10) is pneumatically performed by a pressurised fluid fed directly into the supporting rigid container (14) by pressure fluid feeding means (71).

5. A system according to claim 1 for the aseptic emptying of a flexible container in the form of a flexible plastic bag (10) housed in a rigid supporting container (12), and in which the flexible bag (10) is provided with a hermetically closed discharging mouthpiece (11), characterised by providing for the use of an auxiliary rigid container (14), open on one side, capable of being superimposed on the rigid container (12) for holding the bag;
- slipping the auxiliary container (14), by way of its open side, over the above-stated rigid container (12), after removal from the latter of a closing cover, until said rigid container (12) is almost completely enclosed by the auxiliary container;
- coupling the discharge mouthpiece (11) of the bag (10) to the auxiliary container (14) by protrude it through an aperture in the bottom wall of the above-stated auxiliary container (14);
- orienting the auxiliary container (14), together with the rigid container (12) and the flexible bag (10) inside it, in a pre-established direction and of drawing off the rigid container (12) from the auxiliary container (14) leaving in the latter the flexible bag (10) to be emptied;
- connecting the above-stated mouthpiece (11) to a discharge duct (25) by a valve device arranged to circulate a disinfecting and cleaning fluid;
- perforating said emptying mouthpiece (11) and causing the expulsion of the product from the flexible bag (10) by exerting on the latter a pressure action from inside the auxiliary container towards and in the direction of the mouthpiece (11), until it causes the complete emptying from the bag (10) of the store product.

6. A system according to claim 5, characterised by reverting the auxiliary container (14), together with the rigid container (12) and the flexible bag (10) inside it, until the emptying mouthpiece (11) is positioned to face downwards.

7. A system according to claim 1 or claim 5, characterised by causing the compression of the flexible bag (10) by means of a pressure member in the form of a piston member (67) sliding inside the rigid supporting container (14), said piston member (67) comprising a peripheral sealing means (65, 69) and means for causing the radial expansion of said peripheral seal means (65, 69) making it adhere slidingly to the internal surface of the container.

8. A system according to any preceding claim, characterised in that said rigid container is the normal storage container (12) for the flexible bag (10).

9. A system according to any of preceding claims 1 to 7, characterised by the fact that said rigid container is in the form of an auxiliary container (14) in alternative to the normal rigid storage container (12) for the bag (10).

10. A system according to claim 7, characterised by the fact that said sealing means for the pressure member is in the form of a pneumatically expandable seal (65).

11. A system according to claim 7, characterised by the fact that said sealing means pressure for the member is in the form of an elastically expandable seal (69) and by the fact that said pressure member comprises means (68) for causing the radial expansion of said seal during the compression of the bag (10).

12. A system according to claim 11, characterised by the fact that said means for causing the expansion of the flexible seal comprise an slanted thrusting (68) surface radially acting on the sealing means (69), and means (66) for causing a relative axial sliding movement between said seal means (69) and said thrusting surface (68) following compression of the bag (10).

13. A system according to claim 12, characterised by the fact that said expansion means for the seal comprise a supporting plate (67) for the seal, defining part of the piston member axially moving with respect to the inclined thrusting surface (68).

14. A plant suitably for aseptically emptying flexible bags (10) for foodstuff products by the system according to any of the preceding claims according to which the flexible bag (10) is supported by a rigid container (12, 14), characterised by the fact of comprising: a supporting frame (31) for at least a first (13), a second (18) and a third (20) container supporting station; roll converger means for moving the containers (12, 14) between said stations (13, 18, 20), as well as lifting means (38) for raising and putting a closing cover (23) on said rigid container (12, 14), said cover (23) being provided with pressure means (24) for compressing the flexible bag (10); the apparatus also comprising valve means (30) for hermetically connecting the emptying mouthpiece (11) of the flexible bag (10) with a discharging duct (25), piercing means (55) for perforating said mouthpiece (11) and cleaning means (56) for causing the circulation of a disinfecting and cleaning fluid through said valve means (30) and said mouthpiece (11) before perforation.

15. A plant according to claim 14, characterised by the fact that said second station (18) comprises a container revolving cage (35) to turning the containers, and drive means for turning up said revolving cage (35) with a container.

16. A plant according to claim 15, characterised by the fact that said revolving cage (35) comprises conveyor means (18, 19) for moving containers (12, 14), said conveyor means (18, 19) being spaced apart and positioned at the opposite ends of a container in said revolving cage (35).

17. A plant according to claim 14, particularly for the use with auxiliary containers for supporting the flexible bags during emptying, further characterised by the fact of comprising a gripping device (34) for gripping and raising said containers (12, 14), said gripping device (34) being movable along a suspended rail (32) extending between the first (13) and the third (20) container supporting stations, and by the fact that lifting means (38) are provided for raising and lowering a cover (23) comprising bag-compression means (24), said cover lifting means (38) being hingedly supported by said frame (31), and drive means for moving said lifting means (38) with a cover (23) between an aligned position with an underlying container and a lateral position, in said third station (20) of the plant.

18. A plant according to claim 14, characterised by the fact that said valve means (30) for aseptically connecting the mouthpiece (11) of a flexible bag (10) to a discharge duct (25) comprise mouthpiece perforating means (55).

19. A plant according to claim 18, characterised by the fact that said mouthpiece perforating means comprise a perforating member (55) protruding into a cleaning chamber (49) connected to a product discharge duct (50), and duct means (56, 57) for the circulation of a cleaning fluid, into said cleaning chamber (49), and by the fact that there sealing means (48) are provided for sealing connecting valve means (30) to the emptying mouthpiece (11) of the bag (10), said perforating member (55) being slidingly supported inside said cleaning chamber (49) and being connected to a respective drive means (54).

20. A plant according to claim 19, characterised by the fact that said perforating member (55) is provided at an end of a sliding rod (55') coaxially arranged inside a tubular element (57)for feeding the cleaning fluid into the cleaning chamber (49) of the valve means (30) said tubular element (57) slidably extending into the cleaning chamber and being connected to feeding conduit (56) for circulation of the cleaning fluid, said perforating member (55) having a plug portion for closing the output end for the fluid of said tubular element (57), and biasing means (58) to urge said perforating member (55) in a closed condition against the output end of said tubular element (57) extending into the cleaning chamber (48) of said valve means (30).
